# EUROPEAN PATENT APPLICATION

(11) **EP 2 541 344 A1**
(43) Date of publication of application: **02.01.2013**
(21) Application number: 11171449.9
(22) Date of filing: 27.06.2011
(51) Int. Cl.: G03H 1/00, G03H 1/22

(54) **Method using holography for the displaying of information or image, for example advertisement**

(71) Applicant: Al Fayez Hind, Hakem, 11192 Amman (JO)
(72) Inventor: Al Fayez Hind, Hakem, 11192 Amman (JO)
(74) Representative: Brochard, Pascale

(57) **Abstract**

According to one aspect, the invention relates to a method for displaying information or image hologram comprising the steps of providing a hologram (5) with a holographic representation recorded therein, using a light source (4) to emit light to illuminate said hologram (5) and form a consequent holographic 2D or 3D image, placing said hologram (5) and said light source (4) in an opening below ground level (1), and covering said opening with a transparent material element (2) resistant enough for a viewer (3) to walk on it, the formed holographic 2D or 3D image being made visible through the transparent material element (2).

## Description

### Technical Domain

The present invention relates to a method that uses holographic technology to display information or image, for example advertisement information or image.

### Background of the invention

Advertising is made up of tenths of different formats. Outdoor and indoor advertising can be defined as any type of promotional products or services that reaches the consumer while he or she is outside the home.

Out of home advertising, therefore, is focused on marketing to consumers when they are "on the go" in public places, in transit, waiting, and/or in specific commercial locations advertising formats fall into four main categories: billboards, street furniture, transit, posters, indoor, and alternative.

Amongst the different existing outdoor advertising formats, we can list:
1- Bulletin billboards are usually located in highly visible, heavy traffic areas such as expressways, primary arteries, and major intersections. With extended periods of high visibility, billboard advertisements provide advertisers with significant impact on commuters.
2- Poster - Target audiences with these billboards, which are highly visible to vehicular traffic and pedestrian and are ideal for the introduction of new products/services. Marketers use posters to achieve advertising objectives and increase brand awareness by placing multiple units in strategic locations while lowering the cost per thousand impressions.
3- Street advertising - The use of pavement and street furniture to create media space for brands to get their message onto the street in a cost-effective approach.
4- Wallscape - Wallscapes are attached to buildings and are able to accommodate a wide variety of unusual shapes and sizes. These billboard advertisements are visible from a distance and provide impact in major metro areas.

Amongst various existing Indoor advertizing locations, we can list:
Airport, Train & bus stations, shopping malls, supermarkets, etc use TV screens and indoor signage.

### Summary of the Invention

An existing problem with outdoor and indoor advertising is the limited space and/or visibility that is available in certain areas to support deployment of advertisings. Indeed, in some streets for example, the use of billboards may appear inadequate, the pavement and street furniture may be limited as support to advertisings and the space available for attachment of wallscapes to buildings may be inexistent or very limited. Moreover the lack of eye-catching advertizing media tool necessitates the need to explore new media alternatives.

It is an object of the present invention to propose a method and a system for displaying information and/or image which make use of the available space without limiting further use of this space.

Accordingly, a method for displaying information or image hologram according to the invention comprises the steps of:
- Providing a hologram with a holographic representation recorded therein;
- Using a light source to emit light to illuminate said hologram and form a consequent holographic 2D or 3D image.

It is characterized in that it further comprises the steps of:
- Placing said hologram and said light source in an opening below ground level;
- Covering said opening with a transparent material element resistant enough for a viewer to walk on it, the formed holographic 2D or 3D image being made visible through the transparent material element.

The transparent material element has to be resistant to environmental impacts to keep allowing the 3D image to pass through it.

Thus an advantage of the invention is that no space is lost because the passers-by can walk on the transparent material element and go towards or through the holographic 2D or 3D image ,the holographic equipment being located below the ground level. The use of the transparent material makes it possible for a viewer (as passer-by) to see the holographic 2D or 3D image formed by the hologram.

The new invention that can be sued for indoor and outdoor adverting media utilizes holographic technology to project a product or service in 2D or 3D format. The products and services can be advertized either in 2D or 3D.

This invention can be used in airports, train-stations indoor public & private areas, supermarket & mall floors projecting images.

### Brief description of the drawings:

It will be easier to understand this invention with the help of the detailed illustration on the attached figures:
Figure 1 shows a schematic representation of a holographic equipment for the recording of a the representation of an object on a hologram;
Figure 2 is a schematic representation of the holographic device used to reconstruct the 3D or 2D image of the real object; and
Figure 3 is a schematic view of a holographic equipment used to reconstruct the 3D or 2D image of the real object according to the invention.

### Description of the invention

Holograms, illuminated with lasers or displayed in a darkened room with carefully directed lighting, are more and more common. They're two-dimensional surfaces that show absolutely precise, three-dimensional images of real objects. A viewer doesn't even have to wear special glasses or look through a View-Master to see the images in 3-D.

If the viewer looks at such a hologram from different angles, he/she can see objects from different perspectives, just like he/she was looking at a real object.

Some holograms even appear to move as the viewer walk past them and look at them from different angles. Others change colors or include views of completely different objects, depending on how you look at them.

The holography technology requires by way of example:
- A laser: Red lasers, usually helium-neon (HeNe) lasers, are common in holography. Some home holography experiments rely on the diodes from red laser pointers, but the light from a laser pointer tends to be less coherent and less stable, which can make it hard to get a good image. Some types of holograms use lasers that produce different colors of light as well. Depending on the type of laser you're using, you may also need a shutter to control the exposure.
- Lenses: The lenses used in holography cause the beam to spread out.
- A beam splitter: This is a device that uses mirrors and prisms to split one beam of light into two beams.
- Mirrors: These direct the beams of light to the correct locations. Along with the lenses and beam splitter, the mirrors have to be absolutely clean. Dirt and smudges can degrade the final image.
- Holographic film: Holographic film can record light at a very high resolution, which is necessary for creating a hologram. It's a layer of light-sensitive compounds on a transparent surface, like photographic film. The difference between holographic and photographic film is that holographic film has to be able to record very small changes in light that take place over microscopic distances. In other words, it needs to have a very fine grain. In some cases, holograms that use a red laser rely on emulsions that respond most strongly to red light.

Holography is a technique which enables a light field to be recorded, and reconstructed later.

Thus two steps are typically used for displaying three-dimensional images of real objects. In a first step a hologram of an object is created through an holographic recoding process; and in the second step a virtual representation of the object is reconstructed through an holographic reconstruction process.

### (1) - Holographic recording process

Though holography is often referred to as 3D photography, this is a misconception. A photograph represents a single fixed image of a scene, whereas a hologram, when illuminated appropriately, re-creates the light which came from the original scene; this can be viewed from different distances and at different orientations just as if the original scene were present. The hologram itself consists of a very fine random pattern, which appears to bear no relationship to the scene which it has recorded.

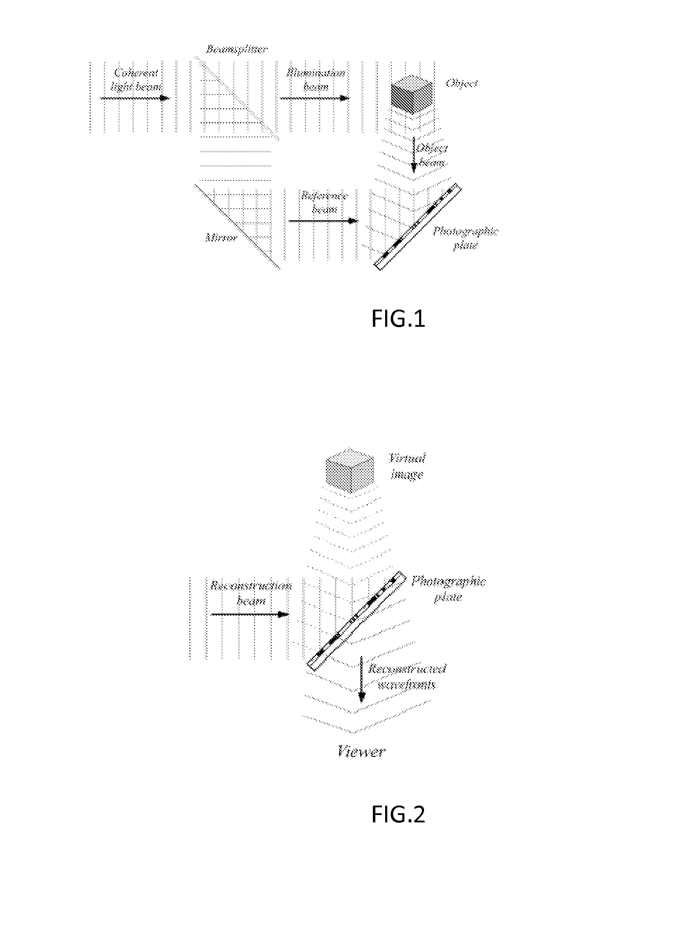

To record a hologram, some of the light scattered from an object or a set of objects falls on the recording medium. A second light beam, known as the reference beam, also illuminates the recording medium, so that interference occurs between the two beams. The resulting light field generates a seemingly random pattern of varying intensity, which is recorded in the hologram. As shown in FIG.1 the following steps are carried out:
1. A coherent light beam, such as laser points, point at a beamsplitter, which divides the beam of light into two parts, an illumination beam and a reference beam.
2. Mirrors direct the paths of these two beams so that they hit their intended targets.
3. Advantageously each of the illumination beam and reference beam passes through a diverging lens and becomes a wide swath of light rather than a narrow beam.
4. One beam, the object beam, reflects off of the object and onto a photographic emulsion plate.
5. The other beam, the **reference** beam, hits the emulsion without reflecting off of anything other than a mirror.

It is important to note that the holographic recording is contained in the random intensity structure (which is a speckle pattern) and not in the more regular structure, which is due to interference arising from multiple reflections in the glass plate on which the photographic emulsion is mounted. It is no more possible to discern the subject of the hologram from this random pattern than it is to identify what music has been recorded by looking at the hills and valleys on a gramophone record surface or the pits on a CD.

### (2)- Holographic reconstruction process

Once the hologram has been created, it can be used to reconstruct a virtual three-dimensional images of the real object, as explained below.

As shown in FIG.2, when a reconstruction beam, identical to the reference beam, illuminates the hologram, it is diffracted by the recorded hologram to produce a light field which is identical to the light field which was originally scattered by the object onto the hologram. When a viewer looks at the hologram, he "sees" the same image on his retina as he would have seen when looking at the original object. This image is often called a virtual image, as it can be seen even though the object is no longer present.

A hologram can reconstruct two images, one real and the other virtual which are replicas of the real object. However, the two images differ in appearance to the observer.

The virtual image is produced at the same position as the object and has the same appearance of depth and the parallax as the original three dimensional object. The virtual image appears as if the observer is viewing the original object through a window defined by the size of the hologram. This image is known as orthoscopic image.

The real image is also formed at the same distance from the hologram, but in front of it.

In the real image, however the scene depth is inverted. This is due to the fact that the corresponding points on the two images (virtual and real) are located at the same distances from the hologram. The real image is known as pseudoscopic image and may give a less pleasing sensation as the observer does not come across objects with inverted depths in normal life.

A distinction has to be further made between reflection holograms and transmission holograms.

**Reflection hologram** This hologram is formed when the reference beam and the object beam are incident on opposite sides of the holographic surface. They interfere and record an image. To reconstruct the image, a point source of white light illuminates the hologram from the proper angle, and the viewer looks at it from the same side as the light source. Reflection holograms require the simplest setup, and are visible without laser light.

**Transmission hologram** This type is created when the reference beam and the object beam are incident on the same side of the holographic surface. They are viewed by shining a spread out laser light through the emulsion side of the hologram at the same angle the hologram was recorded at, with the viewer looking on from the opposite side. Some advantages of the transmission holograms are the followings:
- These holograms are viewed as a sharp image using shining laser light through the hologram.
- Material requirements for recording are more relaxed.
- Less resolving power is needed in materials.
- Transmission hologram can be formed in simple set-up.
- In such holograms, greater depth of the scene is possible.
- The scene in transmission hologram can be projected by shining a collimated laser beam through the hologram

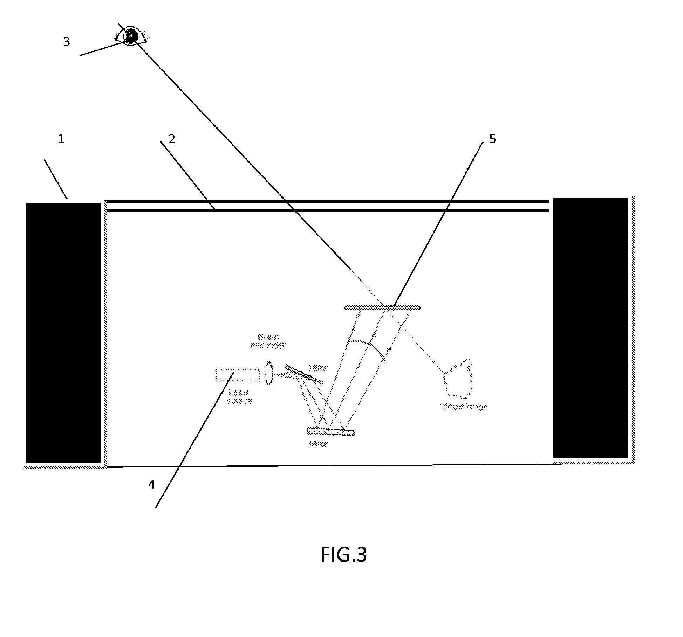

With reference to FIG.3, it is proposed according to the invention to display information or image hologram by
- Providing a hologram 5 with a holographic representation recorded therein;
- Placing said hologram 5 and a light source 4 in an opening below ground level 1;
- Covering said opening with a transparent material element 2 resistant enough for a viewer 3 to walk on it;
- Using said light source 4 to emit light to illuminate said hologram 5 and form a consequent holographic 2D or 3D image, whereby said viewer 3 can look at the holographic 2D or 3D image formed through the transparent material element 2 by the hologram 5.

As shown in FIG.3 the laser source 4 illuminates the hologram 5 through a beam expander and a set of mirrors.

In the embodiment of FIG.3, it is proposed to use a transmission hologram 5 that is viewed with laser light 4. Typically but non-limitatively, the laser light 4 is of the same type than the one used to make the recording. This light 4 is directed from behind the hologram 5 and the image is transmitted to the viewer's side. The *virtual image* can be very sharp and deep. The angle of inclination of the hologram will be adjusted in such a way that it offers the best view for walkers.

This embodiment is not limitative of the present invention. In addition, a reflection hologram or a hybrid hologram (and corresponding holographic system) could be used instead of a transmission hologram.

The transparent material element is typically a sheet for example in glass material and sufficiently resistant for passers-by to walk on it. In the field of optics, transparency is the physical property of allowing light to pass through a material.

When light encounters a material, it can interact with it in several different ways. These interactions depend on the wavelength of the light and the nature of the material. Light waves interact with an object by some combination of reflection, and transmittance with refraction.

Some materials, such as plate glass allows much of the light that falls on them to be transmitted, with little being reflected; such materials are called optically transparent. Absence of structural defects (voids, cracks, etc.) and molecular structure of most liquids are mostly responsible for excellent optical transmission. An optically transparent material is of strong interest for the invention to make the element 2.

As it can be appreciated from the above description, the invention allows to save space: Works are required to provide the opening, or hole, for example in the ground, but the use of a transparent material element avoids that the opening or hole needed to place the holographic system as illustrated in FIG.3 (e.g : light source, hologram, beam expander and mirrors) be lost because the surface at the surface at the ground level remains fully usable to walk.

The foregoing disclosure and description of the invention is illustrative and explanatory thereof. Various changes in the details of the illustrated configuration may be made within the scope of the appended claim(s) without departing from the true spirit of the invention. The present invention should only be limited by the following claim(s).

## Claims

1. A method for displaying information or image hologram comprising the steps of
- Providing a hologram (5) with a holographic representation recorded therein;
- Using a light source (4) to emit light to illuminate said hologram (5) and form a consequent holographic 2D or 3D image,
**characterized in that** it further comprises the steps of:
- Placing said hologram (5) and said light source (4) in an opening below ground level (1);
- Covering said opening with a transparent material element (2) resistant enough for a viewer (3) to walk on it, the formed holographic 2D or 3D image being made visible through the transparent material element (2).
